# EUROPEAN PATENT APPLICATION

(11) **EP 2 945 066 A2**
(43) Date of publication of application: **18.11.2015**
(21) Application number: 15167810.9
(22) Date of filing: 15.05.2015
(51) Int. Cl.: G06F 9/54

(54) **CONTROLLING A SERVER**

(30) Priority: 16.05.2014 GB 201408747
(71) Applicant: Vodafone IP Licensing Limited, The Connection Newbury Berkshire RG14 2FN (GB)
(72) Inventor: Boccardi, Federico, London, W2 6BY (GB); Irmer, Ralf, London, W2 6BY (GB); Charlton, Michael, London, W2 6BY (GB)
(74) Representative: Boult Wade Tennant

(57) **Abstract**

Method, system and application for controlling a program executing within a server from a mobile device. Capturing information describing a user interaction with a user interface of the mobile device. Determining a next user interaction based on the captured information and data describing the user interface. Triggering an event corresponding to the determined next user interaction.

## Description

### Field of the Invention

The present invention relates to a system and method for controlling a server over a network or mobile network and in particular reducing latency for more effective control of the server.

### Background of the Invention

Wireless communications between a mobile device and a remote server typically include the use of mobile networks. Whilst increasing data transfer rates across such networks may improve the delivery of multimedia and other content, for such interactions to include the use of real-time control between remote devices and a server in an effective manner, then latency becomes a limiting factor.

The Tactile Internet-Applications & Challenges; G.P. Fettweis; IEEE Vehicular Technology Magazine March, 2014, discusses latency requirements of different systems and some benefits of reducing latency in a mobile network.

For a user of a mobile device to be able to operate or control a program operating remotely or in a cloud-computing environment, then a dramatic reduction in latency in mobile networks is required. Therefore it is currently not possible to effectively run applications, for example word processors or spreadsheets, from a mobile device where the program executes in a cloud environment. Ideally, the latency between issuing a command on a mobile device (e.g. using a touchscreen) should be less than the order of 1ms. The current best achievable latency is of the order of 20ms. This translates to a displacement error or delay in tracking movements across a touch screen of about 2cm. It is clearly not possible to operate or control remote programs with such latency or delay in command execution.

Reducing latency may be possible but at the expense of other users of the network or with much tighter control of the mobile network. Further reductions may be possible by moving servers closer to mobile base stations but this lacks practicality. Therefore, there is required a system and method for overcoming these limitations and to allow effective control by mobile users of remotely operated servers and programs running on them.

### Summary of the Invention

The general concept is for a server or cloud-based service to predict a control command issued by a user of a mobile device based on their interaction with the device before the command is issued or fully completed or fully received by the server. Data describing this initial, preliminary or early interaction is sent to the server or cloud-based service. In the meantime, the user may complete the command but the server has already reacted or been provided with a head start in order to prepare for the command and trigger a corresponding event or action. Therefore, the apparent latency within the network can be mitigated or its effect reduced because the event or action is triggered by the server or cloud-based service earlier than if it had to wait for confirmation of the completed command (and so for the user to wait for their desired function to execute). Alternatively, the prediction may be carried out by the mobile device and this result or related signalling is sent to the server (preferably with an indication of confidence in this prediction).

Against this background and in accordance with a first aspect there is provided a method for controlling a program executing within a server or preferably a cloud-based server from a mobile device, the method comprising the steps of:
capturing information describing a user interaction with a user interface of the mobile device;
determining a next user interaction based on the captured information and data describing the user interface; and
triggering an event corresponding to the determined next user interaction. The user interaction may be a gesture or part of a gesture captured by the user interface of the mobile device, for example. Therefore, processing of the user's next command or request may be initiated in advance of them completing the gesture (e.g. a finger gesture). The next user interaction may be the completion of the gesture. In one example, a user is moving their finger across a touchscreen towards a selectable object (that when selected triggers an event), i.e. the user interaction. The next user interaction may be the user's finger reaching the selectable object. Therefore, the server may determine that the user will shortly reach the selectable object but before they do so the event associated with that object is triggered. This can reduce apparent latency in the network that provides communication between the mobile device and the server. The data describing the user interface may also be received from the mobile device or it may be stored locally near to or within the server, for example. The information from the mobile device may be captured by the mobile device itself (so that it can determine the next user interaction) or the information may be captured by the server from the mobile device (e.g. received over a network) so that the server carries out the prediction or determination of the next user interaction. The triggered event may include executing a function (e.g. starting a call or SMS, opening an application, printing a document, performing a search, communicating with another device, opening a document, editing a document or creating a calendar entry) or the receipt or transmission of data (e.g. value, text, audio, or video), for example.

Optionally, the event may be an event triggered by a server to occur within the mobile device. However, the event may also be triggered in another device or on the server, for example.

Advantageously, the step of determining the next user interaction may be further based on the user's previous interactions with the user interface. A history of the user's interactions may be built up in order to learn and improve the accuracy of predicted next interactions or selections by the user.

Preferably, the user interface may be a graphical user interface, GUI.

Preferably, the data describing the GUI may include positions of one or more objects within the GUI.

Advantageously, the GUI may be a touchscreen GUI and further wherein the user interaction is a touch or multi-touch gesture or part of a touch or multi-touch gesture.

Preferably, determining the next user interaction may further comprise determining a trajectory of a gesture on the touchscreen GUI. This may be achieved in various ways such as by using trigonometry, extrapolation, artificial intelligence or machine learning algorithms, for example.

Optionally, determining the trajectory may further comprise the step of determining an intersection with an object within the touchscreen GUI.

Optionally, the method may further comprise determining an intersection of the trajectory with a plurality of objects within the touchscreen GUI and triggering an event for each of the plurality of objects.

Optionally, the method may further comprise the step of synchronising the user's further captured interactions with the user interface and the determined next user interaction. For example, the server trigger is not executed until the finger has reached the intended target. In other words, should the determined next user interaction not correspond with the actual next user interaction then a correction may be made.

Preferably, the information from a mobile device describing the user interaction with a user interface of the mobile device may be received over a network. The network may be a mobile network other wireless network, or fixed network for example.

According to a second aspect, there is provided a server or a cloud-based server comprising logic configured to:
receive information from a mobile device describing a user interaction with a user interface of a mobile device;
determine a next user interaction based on the received information and data describing the user interface; and
trigger an event corresponding to the determined next user interaction. There may be a plurality of mobile devices communicating with a single server in this way. There may also be several servers that share the load. Communication may take place across a network and preferably a mobile network. Advantageously, the server may be a virtual server accessible over the network. The received information from a mobile device describing a user interaction may be raw (e.g. only describing the movement of the user's finger) or may contain (or consist entirely of) additional information where some or all of the prediction processing has been carried out by the mobile device.

Advantageously, triggering the event may further comprise issuing a response to the mobile device. This response may be issued across the network or mobile network.

Optionally, the logic may be further configured to transmit additional data with the response.

Preferably, the additional data may include a value corresponding to a prediction accuracy of the determined next user interaction. In other words, the server may determine an accuracy or confidence level (e.g. percentage) of the determined next user interaction and therefore that the event being triggered is the event that the user requires. In an example, the event may only be triggered if the accuracy or confidence level is above a pre-determined threshold (e.g. 50%).

According to a third aspect, there is provided a mobile application comprising logic configured to:
generate a user interface on a mobile device, wherein the user interface includes objects having associated triggerable events;
detect a user interaction with the user interface;
send data describing the user interaction to a server before the user interaction encounters a first object on the user interface;
receive an event trigger from the server, wherein the event trigger corresponds with the first object; and
triggering the event associated with the first object. The mobile application or app may operate within the mobile device. The mobile application may be integral or separate from an operating system of the mobile device. The mobile device may be a smartphone, tablet computer or device with similar functionality. Preferably, the mobile device can communicate with a network such as a mobile network, for example.

Optionally, the logic may be further configured to predict the event associated with the object and further wherein the data describing the user interaction identifies the predicted event. In other words, the mobile application may carry out the prediction and transmit this prediction to the server or the mobile application may only capture the user interactions, send these to the server and allow the server to make the determination or prediction.

The mobile application may be a word processor, spreadsheet, presentation viewer and editor or other similar productivity tool, for example.

The methods described above may be implemented as a computer program comprising program instructions to operate a computer. The computer program may be stored on a computer-readable medium.

The computer system may include a processor such as a central processing unit (CPU). The processor may execute logic in the form of a software program. The computer system may include a memory including volatile and non-volatile storage medium. A computer-readable medium may be included to store the logic or program instructions. The different parts of the system may be connected using a network (e.g. wireless networks and wired networks). The computer system may include one or more interfaces. The computer system may contain a suitable operation system such as UNIX, Windows (RTM) or Linux, for example.

It should be noted that any feature described above may be used with any particular aspect or embodiment of the invention.

### Brief description of the Figures

The present invention may be put into practice in a number of ways and embodiments will now be described by way of example only and with reference to the accompanying drawings, in which:
FIG. 1 shows a schematic diagram of a mobile device running an application to generate objects on a display screen used to control a server, given by way of example only; and
FIG. 2 shows a schematic diagram of a mobile device running a further example application to generate objects on a display screen used to control the server;
FIG. 3 shows a schematic diagram of a mobile device running a further example application to generate objects on a display screen used to control the server;
FIG. 4 shows a schematic diagram of proximity sensors used to capture user interactions used to control the server;
FIG. 5 shows a timing diagram illustrating latency within a prior art system for controlling a server over a mobile network;
FIG. 6 shows a timing diagram illustrating latency within an improved system for controlling the server over the mobile network;
FIG. 7 shows a timing diagram illustrating latency within a further improved system for controlling the server over the mobile network;
FIG. 8 shows a schematic diagram of a system for controlling the server over the mobile network; and
FIG. 9 shows a schematic diagram of a mobile application used to control the server over the mobile network.

It should be noted that the figures are illustrated for simplicity and are not necessarily drawn to scale. Like features are provided with the same reference numerals.

### Detailed description of the preferred embodiments

Applications or programs requiring low (or lower) latency may be deployed in a centralized or distributed (edge) cloud. In one example, MS Office (RTM) applications, where the user may be running a program in the cloud from a mobile device, may be controlled from the mobile device. Latency requirements for this type of application are related to the physiological tactile reaction but are typically of the order of 1ms. In current mobile networks (e.g. using LTE) the best achievable latency, calculated assuming the content at the edge, is of the order of 20ms, which results in a displacement of 2cm between the position of the finger and the visual feedback of the application or apparent triggered event or function.

This latency may be reduced by predicting the user actions, commands and/or requests and triggering the corresponding actions in the cloud software in advance or at least earlier.

A mobile device has a graphical user interface (GUI) which is interfaced with a server preferably in the cloud. Preferably, the cloud server holds information about the GUI, such as a history, e.g. regarding user input(s) into the GUI. This may also or instead be held within the mobile device. Based on the input sequences or user interactions, the cloud server can trigger responses anticipated or predicted to be required by the user of the mobile device. The mobile device may choose to perform the particular triggered response or one of a selection offered by the cloud server, for example. The server may execute a program, which is controlled by the mobile device. The program may cause events to occur. These events may occur on the mobile device, in the server or elsewhere. The events may be computing actions, transmission of data from one entity to another or cause another program to carry out an operation or event.

Prediction of finger movement or other user interactions with the mobile device may occur at either or both the mobile device and at the server. In this way, services may be provisioned at the mobile device but where some or all of the necessary processing is carried out by the server.

In order to determine the relevance or accuracy of the prediction, intelligence or logic may be utilised at the mobile based upon the confidence of the prediction performed at the cloud. For example, where the cloud server reports a confidence of 50% or below when providing a service, the mobile device may reply with a not acknowledged (NACK) signal and seek (or wait for) a second data set or triggered event from the cloud. In an alternative embodiment the server reports a "hold" message or a "discard" message.

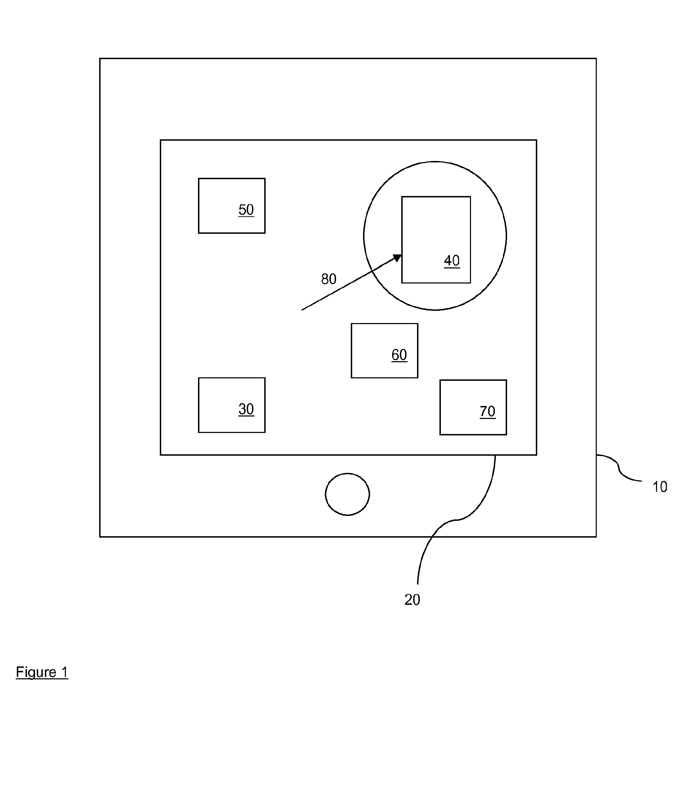

Figure 1 shows a schematic diagram of a mobile device 10 (e.g. tablet computer) having a screen or touchscreen 20. Various objects 30, 40, 50, 60, 70 are displayed on the touchscreen 20. Any or all of these objects may have associated functions or events and may be used to control a server (especially software operating on the server). Arrow 80 indicates a user's finger motion towards one object 40 on the touchscreen 20. Based on this captured motion (which may be communicated over a network to the server) a prediction is made resulting in a trigger of the corresponding reaction in the cloud or server. This trigger may also have a further effect on the mobile device.

As a further enhancement, synchronization may be achieved between visual feedback directed to the user on the mobile device 10 (i.e. at the client side) and the motion of the user's finger (especially when there are errors in the predicted event). The overall effect for the user is ideally to observe a visual or other feedback within 1ms of their finger reaching object 40.

Functional features to achieve this may be present at the mobile device (user equipment, UE) 10, within the network infrastructure, and/or at the server (e.g. cloud server).

These features or components:
- Allow the mobile device 10 to provide the cloud server with relevant information about the user's motions.
- Based on this information, based on the knowledge about the positions of the objects on the screen and/or based on the user's past choices and about the content, the mobile device 10 and/or the cloud server, implement an algorithm to anticipate the user's motion, e.g. predicting the target object. Such processing may be shared between the mobile device 10 and the server or carried out exclusively at either.
- Based on this prediction the cloud server can trigger the right response and send the related information or data to the mobile device 10 or otherwise generate an event trigger.
- At the mobile device 10 (or at the server), there may also be a mechanism to synchronise between the user motions and the server feedback.

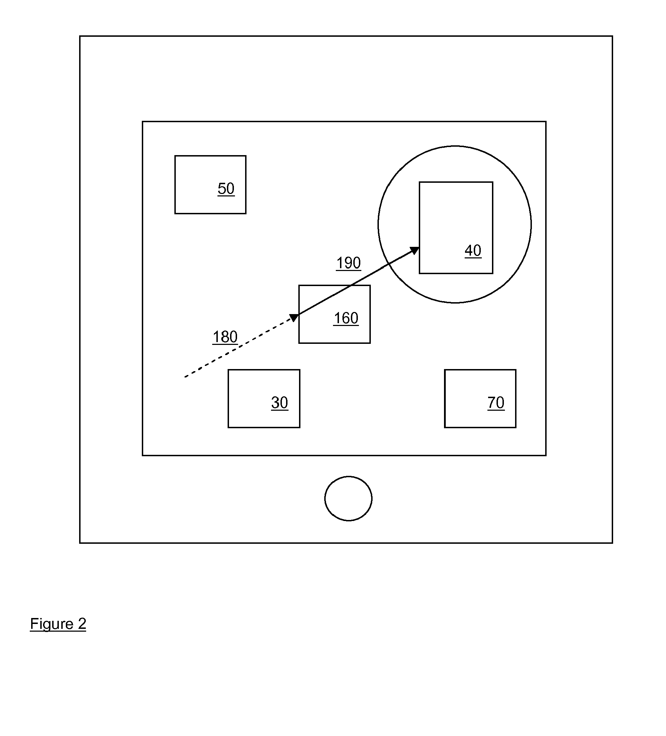

A further enhancement allows motion prediction to take place with multiple targets or objects 40. This is illustrated with regards to figure 2. For example, if there are multiple objects 160, 40 along the same trajectory 180, 190 then the cloud server may trigger multiple feedbacks or events and send these to the mobile device 10. Additionally, the mobile device 10 may choose or determine the right feedback based on user context. The functionality of this enhancement may be summarized as follows:
Motion prediction with multiple targets
   - At the cloud server:
      - Same as the previous example (described with respect to figure 1), but the server may trigger multiple actions or action. For example, there could be multiple objects 160, 40 on the same trajectory 180, 190.
      - The server can provide the mobile device 10 with multiple feedbacks or event triggers, each specific to alternative or possible predicted objects 160, 40.
   - At the mobile device 10:
      - Provide or preferably, guarantee client-server synchronisation.
      - The mobile device 10 may receive multiple potential feedbacks, events or triggers from the Cloud Server. It may then choose or determine the correct or most appropriate one (or more), based on the final position of the finger. The remaining events or triggers may be ignored or discarded. This uses more computer resources at the server (which could otherwise be detrimental to the operation of the mobile device 10). However, this additional overhead can be absorbed by the greater available resources of the server.

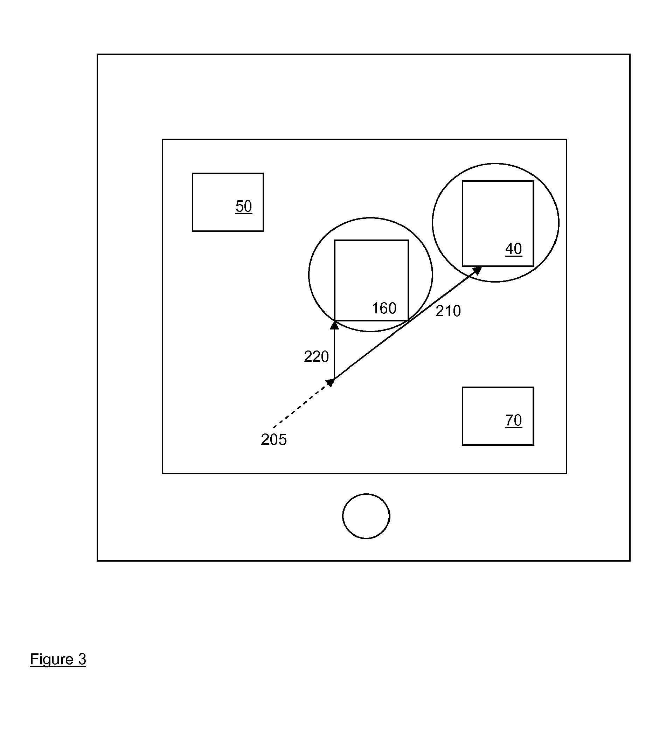

Any or all of the previous embodiments may be further extended or enhanced by allowing motion prediction with different types of motion estimation at the mobile device 10. This further enhancement is shown schematically in figure 3.

In one example implementation the system provides a prediction based on a "swipe" user interaction on the touchscreen 20 of the mobile device. Such an action is demonstrated in figure 3 as arrow 210 starting from position of 205. However, the user may have a potential user interaction of a jump starting with a tap at position 205 with a further tap on object 160 following a route indicated by arrow 220. In some user control interactions, users don't swipe their finger, but rather jump from one position to another. Therefore, the actions, events or other data caused by the user selecting both objects 40 and 160 may be returned to the mobile device 10. The mobile device 10 may then choose to use or accept either or both events or associated data.

In one example, these objects 40, 160 may be selected to play different audio tracks (i.e. instruct the server to provide these tracks). The events may be the initialisation of downloads on the mobile device 10 of two different tracks. The mobile device 10 may determine, based on its own data or data accompanying the events that the track associated with object 40 is more likely to be requested by the user and so discard the initial download of the track associated with object 160. Nevertheless, latency may be reduced as both tracks start to download (or at least processing of these alternative requests may start) before the user interaction completes.

Other example user interactions may include taps or multiple taps, dropdown list scrolling, pinch-to-zoom in/out, select text, copy, paste, cut, insert text/images, etc.

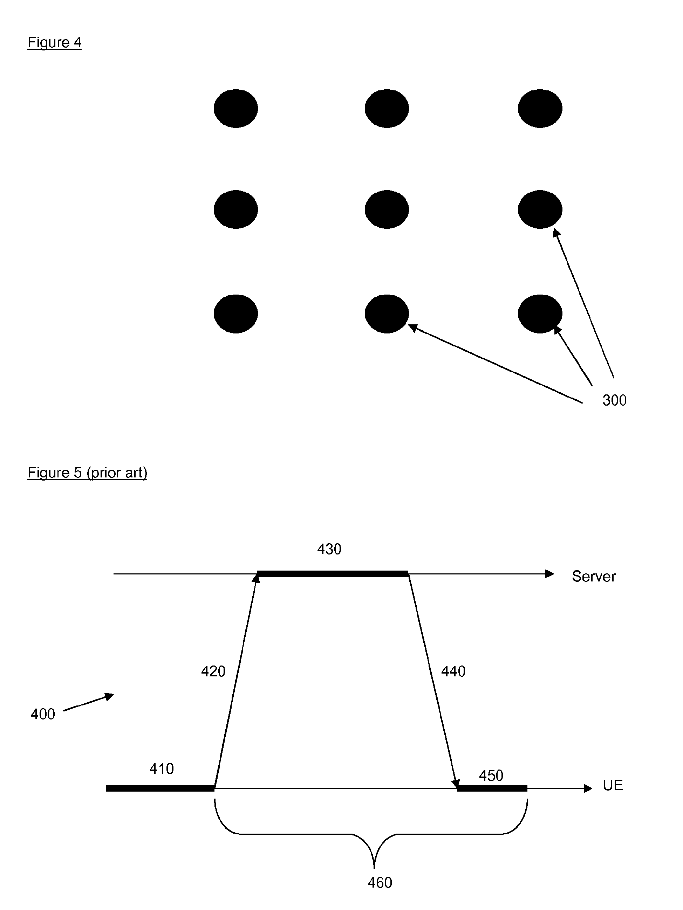

User interactions are not limited to the use of the touchscreen 20. For example, other components may be used to capture user interactions including a camera, proximity sensors 300 (as shown in figure 4), accelerometers, temperature sensors, and microphones. Non-touch screens may also be used, especially using multiple cameras to capture user interactions.

Any or all of the embodiments may include the network cooperating with the cloud server so that the information may be exchanged between the server and one or more mobile devices with a higher priority and therefore further reducing latency. This higher priority communication may be limited to this specific communication type and then revert to normal priority or latency so as to reduce or minimise adverse effects on other mobile users in the network.

In the case of multiple or alternative feedbacks or event triggers (see figure 2), the network may associate a different priority to the different feedbacks or events in a way to prioritize some information or data as a function of the likelihood that this will be associated with the actual object 40 that the user will select (and so the way in which the server is to be controlled).

In an example architecture, functions to be included in the different nodes include:
At the server:
   A mechanism for predicting the finger's motion based on:
      the motion position information sent by the mobile device 10;
      the context and user location (in a mall, at home, at the office, etc.);
      specific information about the user; and
      average information collected from different users using the same application.
   A mechanism for sending one or multiple updated data sets to the UE; and/or
   A set of application programming interfaces (APIs) to expose the prediction capabilities to over-the-top (OTT) content providers.
At the base station:
   A mechanism to prioritize the messages or event triggers based on confidence levels or other criteria.
At the mobile device 10:
   A mechanism to synchronise the information sent by the server with the user's actual (or eventual) motion or interaction.
   A mechanism for checking the coherence of the information received by the cloud server with respect to the user motion or interaction.
   A mechanism to combine and select between different information sets sent by the cloud server.
   A set of APIs to be exposed.

In any or all of these embodiments, the mechanism for predicting user or target object 40 may be realised at the mobile device 10 rather than at the cloud or server.

Benefits of this system and method include the user perceiving a lower latency between their actions and the reactions triggered by the cloud or server. For example, these functions allow anticipating an icon that will be clicked by the user and putting into effect (earlier) the visual feedback or other event triggered by the click in advance. The synchronisation function introduced at the mobile device 10, may allow the visual feedback or triggered event too arrive with reduced delay.

Further possibilities of all embodiments include exposing some APIs to the over-the-top (OTT) content or service providers. For example, in order to provide low latency services for MS Office (RTM), this idea may involve opening some APIs to Microsoft.

Figure 5 illustrates graphically how latency is encountered in prior art systems where no user interaction prediction is used. The horizontal axis represents elapsed time. The UE arrow indicates interactions with the mobile device 10 and the server arrow indicates processes occurring on the server, such as a program execution.

Line 410 indicates the user's finger motion across the touchscreen 20 of the mobile device 10, which is used to control the program on the server. Data describing this motion is transmitted to the server (arrow 420), which encounters some delay or latency as the data propagates through the mobile network.

Line 430 represents the time take for the server or cloud to calculate an event, which may be a set of data required by the mobile device 10. The event may result in requested data being transmitted (over the mobile network) to the mobile device 10. Transmitting these data is represented by line 440. Line 450 represents the event (e.g. presenting data) occurring on the mobile device. Therefore, the overall latency may be represented by the distance (time) 460.

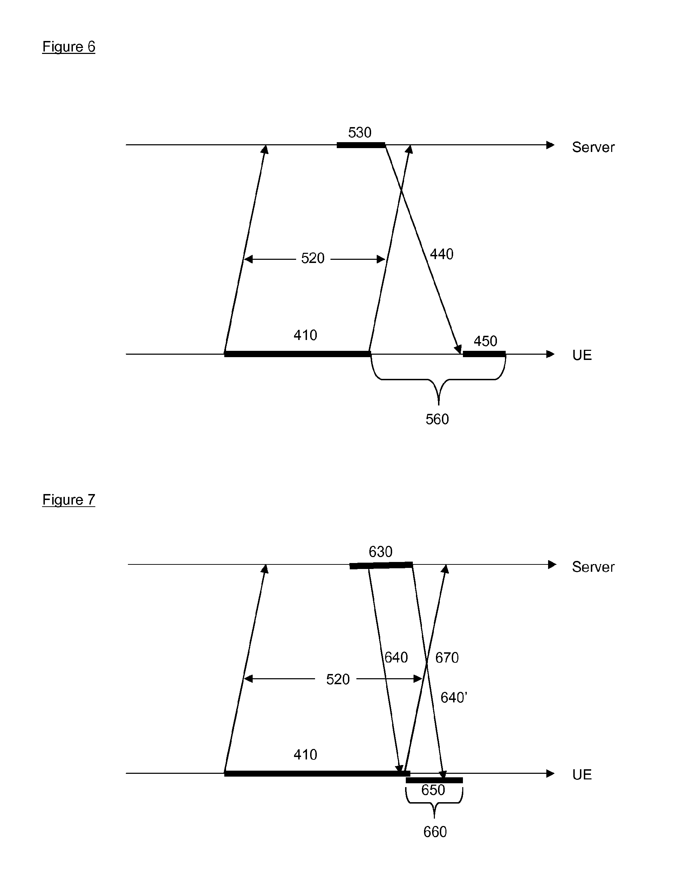

This scenario may be compared with that of figure 6 in which prediction of future or next events takes place. Like features and timeframes are provided with the same or similar reference numerals.

In the example scenario of figure 6, the mobile device is constantly transmitting the finger motion or user interaction to the server. This is represented by the area between arrows 520. However, before the user interaction completes, the server starts to determine or predict the eventual object that the user will select (i.e. using the initial or first part of the complete user interaction).

The server calculates the new data set or event trigger along line 530, which starts before the user interaction completes in this example. This prediction may be based on data stored in the cloud, e.g. repetitive actions by the user and/or by many cloud users, for example.

In this example, the triggered event is determined before the user interaction completes and the event trigger (e.g. sending data) also commences before the user interaction completes. The event being transmitted to the mobile device 10 over the network is illustrated by line 440, starts before the complete user interaction has been received by the server in this example. Again, line 450 represents the event (e.g. presenting data) occurring on the mobile device 10 but in this case the latency 560 is reduced. During the time that the event occurs on the mobile device 10 (e.g. displaying new data) then a coherence test between the predicted event and the actual event associated with the object 40 takes place to provide synchronisation.

Figure 7 graphically illustrates a further enhancement including prediction correction and refusal. Again, the user interaction 410 is transmitted from the mobile device 10 to the server 520. However, the server now continuously calculates or predicts target events as more data describing the user interaction is received 630.

The server sends an early predicted event (which may be the transmission of data) to the mobile device at line 640. This may be accompanied by optional metadata describing a confidence level in the prediction. These metadata may further include a destination location or object on the touchscreen 20 associates with the prediction. The metadata may further include a hold message to the mobile device 10 if it is above a predetermined likelihood or probability that further event transmissions may occur (e.g. low probability of location prediction accuracy).

The mobile device 10 may send back to the server a non-acknowledgement (NACK) (e.g. via an application layer or from elsewhere) when the mobile device (or an application running on the mobile device 10) determines the prediction to be invalid. The server transmits a further or updated event (data set) to the mobile device at line 640' when further data about the user interaction is received. This may be accompanied with or without a hold message depending on if the prediction confidence is greater than the pre-determined threshold (e.g. 50%).

Again, the event occurs over line 650 and latency is shown as 660. When the initial prediction is correct (but with a low confidence level) an advantage may be gained because the correct event including associated data may have started transmission earlier but simply not actioned (due to the low confidence or probability level).

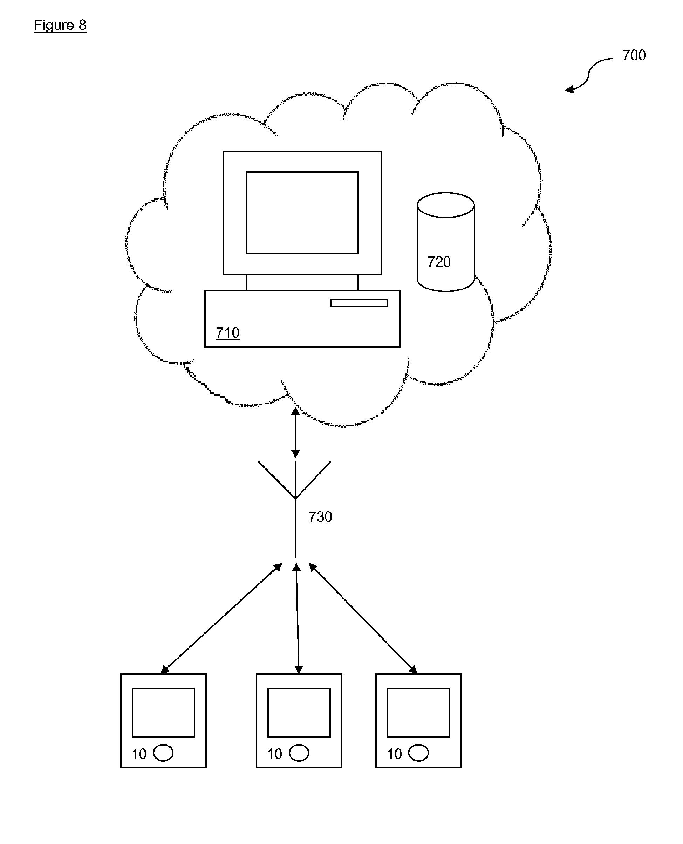

Figure 8 shows schematically a system 700 used to implement the previously described methods. In particular, one or more mobile devices 10 communicate over the mobile network through one or more base stations 730. The server 710 may operate in the cloud environment. The server 710 may have an associated data store or database 720 configured to store the events, past user interactions, user interface description data and other information used to determine next user interactions or improve such a predictions process.

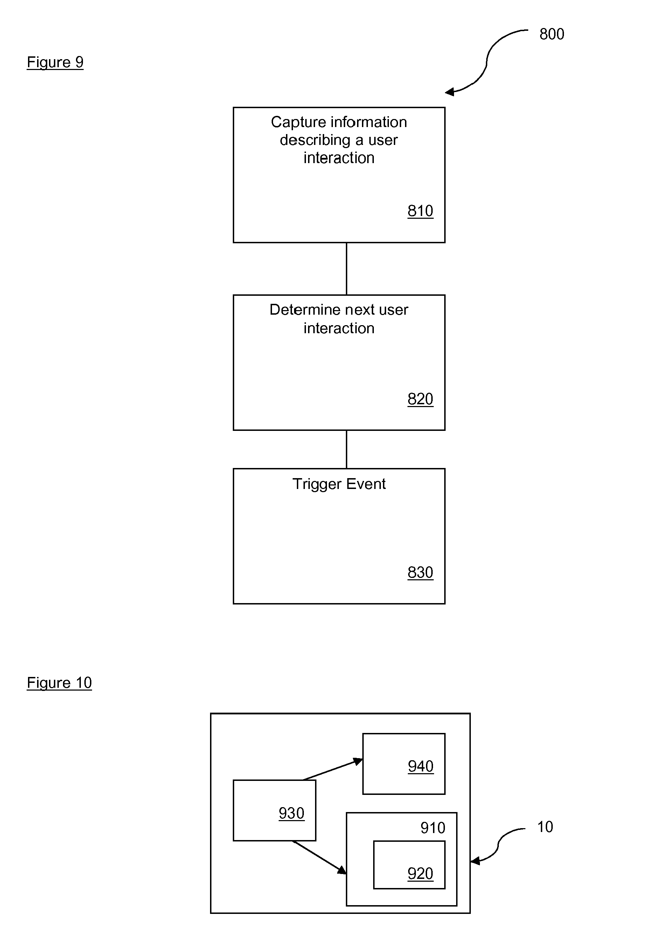

Figure 9 shows a flowchart of the method 800 used to control the program executing on the server 710. At step 810 the information describing the user interaction is captured. This may be captured by the mobile device 10 and/or transmitted to the server 710. At step 820 the next user interaction (which could be the current user interaction or more specifically the completion of the current user interaction) is determined. At step 830 the associated event is triggered. In this way, the mobile device 10 controls the server 710. As described earlier, the triggered event is the event associated with the completed user interaction.

Figure 10 illustrates schematically a mobile application 910 and associated data 920 within the mobile device 10. A processor 930 executes the mobile application (or app) to generate a user interface 940 (e.g. GUI) on the display 20. The user interface includes 940 objects having associated triggerable events (not shown on this figure).

The processor 930 also detects user interactions with the user interface 940 and sends data describing the user interaction or interactions to the server 710. These data may be unprocessed user interaction or some or all of the prediction may take place within the processor 930 executing the app 910. In this case the data describing the user interactions may be in the form of a predicted object and/or triggerable event. This occurs before the user interaction encounters the object (i.e. typically before the user interaction completes).

The app 910 may be configured to receive the event trigger from the server and then trigger the event (e.g. play content received form the server).

The app may execute within a suitable mobile operating system. Example operating systems include iOS and Android, although others may be used. The server may be of any suitable type and running a suitable operating system such as Windows, Linux, UNIX, or Solaris, or other software, for example.

As will be appreciated by the skilled person, details of the above embodiment may be varied without departing from the scope of the present invention, as defined by the appended claims.

For example, the mobile device may be a smartphone, tablet computer, laptop computer or any device that can interaction with a network. The network has been described as a mobile network (e.g. GSM, CDMA, LTE, 2G, 3G or 4G). This may include cellular networks or any network, especially where latency needs to be reduced to improve user experience or control.

Many combinations, modifications, or alterations to the features of the above embodiments will be readily apparent to the skilled person and are intended to form part of the invention. Any of the features described specifically relating to one embodiment or example may be used in any other embodiment by making the appropriate changes.

## Claims

1. A method for controlling a program executing within a server from a mobile device, the method comprising the steps of:
capturing information describing a user interaction with a user interface of the mobile device;
determining a next user interaction based on the captured information and data describing the user interface; and
triggering an event corresponding to the determined next user interaction.

2. The method according to any previous claim wherein the event is an event triggered by a server to occur within the mobile device.

3. The method of claim 1 or claim 2, wherein the step of determining the next user interaction is further based on the user's previous interactions with the user interface.

4. The method according to any previous claim, wherein the user interface is a graphical user interface, GUI.

5. The method of claim 4, wherein the data describing the GUI includes positions of one or more objects within the GUI.

6. The method of claim 4 or claim 5, wherein the GUI is a touchscreen GUI and further wherein the user interaction is touch or multi-touch gesture.

7. The method of claim 6, wherein determining the next user interaction further comprises determining a trajectory of a gesture on the touchscreen GUI.

8. The method of claim 7, wherein determining the trajectory further comprises the step of determining an intersection with an object within the touchscreen GUI.

9. The method of claim 8 further comprising determining an intersection of the trajectory with a plurality of objects within the touchscreen GUI and triggering an event for each of the plurality of objects.

10. The method according to any previous claim further comprising the step of synchronising the user's further captured interactions with the user interface and the determined next user interaction.

11. The method according to any previous claim, wherein the information from a mobile device describing a user interaction with a user interface of the mobile device is transmitted to the server over a network.

12. A server comprising logic configured to:
receive information from a mobile device describing a user interaction with a user interface of a mobile device;
determine a next user interaction based on the received information and data describing the user interface; and
trigger an event corresponding to the determined next user interaction.

13. The server of claim 12, wherein triggering the event further comprises issuing a response to the mobile device.

14. The server of claim 13, wherein the logic is further configured to transmit additional data with the response.

15. The server of claim 14, wherein the additional data includes a value corresponding to a prediction accuracy of the determined next user interaction.

16. A mobile application comprising logic configured to:
generate a user interface on a mobile device, wherein the user interface includes objects having associated triggerable events;
detect a user interaction with the user interface;
send data describing the user interaction to a server before the user interaction encounters an object on the user interface;
receive an event trigger from the server, wherein the event trigger corresponds with the object; and
triggering the event associated with the object.

17. The mobile application of claim 16, wherein the logic is further configured to predict the event associated with the object and further wherein the data describing the user interaction identifies the predicted event.

18. A computer-readable medium carrying a computer program comprising program instructions that, when executed on a computer cause the computer to perform the method of any of claims 1 to 11.
